# EUROPÄISCHE PATENTSCHRIFT

(11) **EP 0 495 063 B1**
(45) Veröffentlichungstag und Bekanntmachung des Hinweises auf die Patenterteilung: **04.01.1995**
(21) Anmeldenummer: 91914557.3
(22) Anmeldetag: 08.08.1991
(51) Int. Cl.: G01D 5/26, G01D 5/14

(54) **ANORDNUNG ZUR LAGEFIXIERUNG EINES FLEXIBLEN TEILUNGSTRÄGERS EINES LÄNGENMESSSYSTEMS AN EINER MASCHINE**
ARRANGEMENT FOR POSITIONING A FLEXIBLE DIVISION CARRIER OF A LENGTH-MEASURING SYSTEM ON A MACHINE
DISPOSITIF DE FIXATION EN POSITION DU SUPPORT FLEXIBLE DE GRADUATION D'UN SYSTEME DE MESURE DE LA LONGUEUR SUR UNE MACHINE

(30) Priorität: 08.08.1990 DD 343321
(43) Veröffentlichungstag der Anmeldung: 22.07.1992
(73) Patentinhaber: CARL ZEISS JENA GmbH, 07745 Jena (DE)
(72) Erfinder: FREITAG, Hans-Joachim, D-6900 Jena (DE); ZIESEMANN, Manfred, D-6902 Jena (DE); FRÖBE, Wolf-Dietrich, D-6900 Jena (DE)
(74) Vertreter: Geyer, Werner, Dr.-Ing.
(86) Internationale Anmeldenummer: EP9101507
(87) Internationale Veröffentlichungsnummer: WO9202781

(56) Entgegenhaltungen:
- EP-A- 0 294 154
- US-A- 3 533 703
- US-A- 4 541 181

## Beschreibung

### Gebiet der Erfindung:

Die Erfindung bezieht sich auf eine Anordnung zur Lagefixierung eines flexiblen Teilungsträgers eines Längenmeßsystems an einer Maschine, bei der an einem ersten Maschinenelement ein bandförmiger elastischer Teilungsträger für eine translatorische Teilung unter Vorspannung befestigt ist, und bei der an einem relativ zum ersten Maschinenelement beweglichen zweiten Maschinenelement eine Abtasteinrichtung für die Teilung angebracht ist, wobei eine Einrichtung zur zwangsweisen relativen Zuordnung zwischen Teilungsträger und Abtasteinrichtung in Abtastrichtung vorgesehen ist.

Die Erfindung ist anwandbar bei translatorischen Meßsystemen, bei denen die Positionsinformation durch Abtastung einer Teilung auf einem flexiblen, bandförmigen Teilungsträger mittels eines Tastkopfes gewonnen wird.

### Stand der Technik:

Es sind Längenmeßeinrichtungen bekannt, bei denen als Teilungsträger elastische Metallbändern unter Vorspannung eingesetzt werden (US-A-3 816 002, DD-A1-269 439).

Bei frei tragenden, flexiblen Teilungsträgern können Schwingungen und große Relativverlagerungen zwischen Teilungsträger und Abtasteinheit quer zur Meßrichtung die Meßgenauigkeit beeinträchtigen bzw. sogar zum Meßsystemausfall führen.

Bei der Anordnung aus der DE-A1-2 016 253 werden diese Nachteile beseitigt, indem zwischen dem flexiblen Band und einer Unterlage ein Schaumstoffkörper hoher Längs- und Querelastizität eingefügt und mit dem Band und der Unterlage verklebt ist. Darüberhinaus ist das flexible Band breiter als der Schaumstoffkörper, so daß am vorspringenden Bandbereich Führungsmittel der Abtasteinrichtung angreifen.

Nachteile dieser Lösung sind, daß an die Homogenität des Materials des elastischen Bandes und des Schaumstoffkörpers zur Sicherung einer guten Maßhaltigkeit der Teilung hohe Forderungen zu stellen sind, und daß eine Unterlage mit einem hohen Grad an Ebenheit für die gesamte Meßlänge erforderlich ist.

In der DD-A1-245 482 ist eine Lösung beschrieben, bei der zwischen den Abtastelementen und der die Maßverkörperung tragenden Seite des Meßbandes ein abstimmbares, im Abtastkopf befestigtes Distanzelement mit einer ebenen Anlagefläche für das Meßband angeordnet ist, wobei an der gegenüberliegenden Seite des Meßbandes ein bewegliches Gleitelement mittels Federkraft das Meßband ständig gegen das Distanzelement drückt.

Diese Lösung führt vor allem bei langen Meßbändern und bei Meßbändern mit geringer Längssteifigkeit, wie z.B. bei Teilungsträgern aus Polyester oder Polyester/Stahlbandverbund, zu sehr großen Meßfehlern, vor allem bei Meßrichtungsumkehr, da die Gleitreibung des Distanzelementes und des angefederten Gleitelementes nicht mehr vernachlässigbar ist.

### Beschreibung der Erfindung:

Ziel der Erfindung ist es einerseits, die Meßfehler bei frei gespannten Bandmeßsystemen zu verringern, und andererseits, den konstruktiven und fertigungstechnischen Aufwand zur Lagefixierung des flexiblen Teilungsträgers zu reduzieren sowie darüberhinaus die Lebensdauer und Zuverlässigkeit der Meßsysteme zu erhöhen.

Der Erfindung liegt die Aufgabe zugrunde, eine Anordnung zur Lagefixierung eines flexiblen Teilungsträgers zu entwickeln, die stets einen fest vorgegegebenen Lagebereich zwischen Abtastelement und Maßverkörperung sichert, bei der Relativbewegung zwischen Teilungsträger und Abtastelement die Längskräfte auf den Teilungsträger reduziert, Schwingungen des Teilungsträgers so dämpft, daß diese nur geringe Meßunsicherheiten verursachen, und den Verschleiß am Teilungsträger wesentlich herabsetzt.

Das Wesen der Erfindung zur Lösung dieser Aufgabe besteht darin, einen bandförmigen elastischen Teilungsträger, der unter großer Vorspannkraft an einem Maschinenbett fest eingespannt ist, mit einer fremd geführten Abtasteinrichtung abzutasten, die mit mindestens je einem Begrenzungselement für die Lagebegrenzung des elastischen Teilungsträgers senkrecht zur Teilungsrichtung versehen ist. Diese Begrenzungselemente sind so angeordnet, daß sie im Abtastbereich der Abtasteinrichtung nur die relativen Auslenkungen der abzutastenden Struktur auf den Teilungsträger zulassen, die im Toleranzbereich für eine sichere Strukturabtastung der Abtasteinrichtung liegen. Die erfindungsgemäße Anordnung der Begrenzungselemente gewährleistet für den überwiegenden Teil des Einsatzes eine berührungslose und damit kräfte- und verschleißfreie Strukturabtastung. Im Falle einer zu großen Relativverlagerung zwischen Abtasteinrichtung und Teilungsträger werden durch die Begrenzungselemente eine Zwangsführung des Teilungsträgers zum Tastkopf so realisiert, daß eine sichere Strukturabtastung durch die Abtasteinrichtung gewährleistet ist.

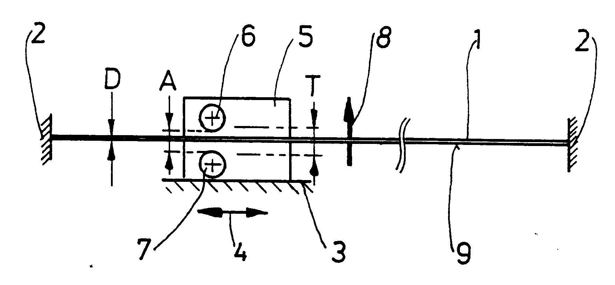

### Kurze Beschreibung der Zeichnung:

Die Erfindung wird anhand der Zeichnung im Prinzip beispielshalber noch näher erläutert. Die einzige Figur zeigt dabei eine Schnittdarstellung der Ausführung der Erfindung im Idealzustand, d.h. mit idealer Mittellage des gespannten Teilungsträgers.

### Ausführliche Beschreibung der Zeichnung:

Ein elastischer Teilungsträger 1 mit einer Dicke D ist unter Vorspannung fest an einem ersten Maschinenelement 2 eingespannt. An einem relativ zum ersten Maschinenelement 2 in Meßrichtung beweglichen zweiten Maschinenelement 3 ist eine Abtasteinrichtung 5 starr angekoppelt. Als Rollen ausgebildete Führungs- bzw. Begrenzungselemente 6 und 7 befinden sich bezüglich einer Abtastrichtung 8 auf beiden Seiten des Teilungsträgers 1.

Bei einem bevorzugten Ausführungsbeispiel weisen die beiden Begrenzungselemente 6, 7 in Abtastrichtung 8 einen Abstand A von 1,2 mm und der Teilungsträger 1, der aus einem elastischen Metallband besteht, eine Dicke D von 0,4 mm auf. Die zulässige maximale Lagetoleranz T (in Abtastrichtung 8) für eine Teilung 9 auf dem Teilungsträger 1 beträgt dabei 1 mm. Aus der Differenz zwischen der Teilungsträgerdicke D und dem Abstand A der Begrenzungselemente 6, 7 ergibt sich für die maximal mögliche Lageänderung der Teilung 9 relativ zur Abtasteinrichtung 5 in Abtastrichtung 8 ein Betrag von 0,8 mm. Auf die ideale Mittellage des gespannten Teilungsträgers 1 bezogen sind die Begrenzungselemente 6, 7 in der Abtasteinrichtung 5 so angeordnet, daß sie vom Teilungsträger 1 jeweils einen Abstand 0,4 mm aufweisen und zu diesem spiegelsymmetrisch liegen.

Bei Relativverlagerungen von weniger als 0,4 mm aus der idealen Mittelstellung zwischen Abtasteinrichtung 5 und Teilungsträger 1 wird einerseits gewährleistet, daß die Begrenzungselemente 6, 7 den Teilungsträger 1 nicht berühren und somit kein Verschleiß auftritt, und andererseits gesichert, daß die Teilung 9 im Abtast-Toleranzbereich der Abtasteinrichtung 5 liegt, was eine sichere Teilungsabtastung gewährleistet. Treten im Ausnahmefall größere Verlagerungen der Abtasteinrichtung 5 auf, so begrenzen die Begrenzungselemente 6, 7 diese Relativverlagerungen zwischen der Teilung 9 und der Abtasteinrichtung 5 infolge der Zwangsführung des elastischen Teilungsträgers 1 jedoch auf 0,4 mm, so daß auch dann die sichere Teilungsabtastung gewährleistet ist.

Die Begrenzungselemente 6, 7 begrenzen aber auch größere Verlagerungen des elastischen Teilungsträgers 1 im Abtastbereich der Abtasteinrichtung 5, so daß stets eine sichere Abtastung der Teilung 9 gewährleistet wird. Für diesen Fall sind die Rollen 6, 7 auf ihren Umfangs-Außenflächen, welche die Anlageflächen für den Teilungsträger 1 darstellen, zur Minimierung der dann auftretenden Reibung poliert oder mit einer zusätzlichen Schicht aus einem Werkstoff mit günstigen Reibeigenschaften, wie etwa Polytetrafluoräthylen (PTFE), versehen.

## Patentansprüche

1. Anordnung zur Lagefixierung eines flexiblen Teilungsträgers (1) eines Längenmeßsystems an einer Maschine, bei der an einem ersten Maschinenelement (2) ein bandförmiger elastischer Teilungsträger (1) mit einer translatorischen Teilung (9) unter Vorspannung angebracht und an einem relativ zum ersten Maschinenelement (2) beweglichen zweiten Maschinenelement (3) eine Abtasteinrichtung (5) für die Teilung (9) vorgesehen ist, wobei eine Einrichtung zur zwangsweisen relativen Zuordnung zwischen Teilungsträger (1) und Abtasteinrichtung (5) in Abtastrichtung (8) am zweiten Maschinenteil (3) vorgesehen ist, die aus mindestens zwei Begrenzungselementen (6; 7) besteht, wobei sich mindestens ein Begrenzungselement (6; 7) auf jeder Seite des Teilungsträgers (1) befindet, **dadurch gekennzeichnet,** daß der elastische Teilungsträger (1) zwischen den zu seinen beiden Seiten angeordneten Begrenzungselementen (6, 7) in Abtastrichtung (8) relativ zur Abtasteinrichtung (5) auslenkbar ist, wobei die mindestens zwei Begrenzungselemente (6, 7) zur Begrenzung der Auslenkung des Teilungsträgers (1) in der Abtasteinrichtung (5) dienen, und der Abstand (A) in Abtastrichtung (8) zwischen den Begrenzungselementen (6, 7) so gewählt ist, daß diese in Abtastrichtung (8) nur Auslenkungen des gespannten Teilungsträgers (1) zulassen, die kleiner als die zulässige Lagetoleranz (T) der Teilung (9) oder gleich groß wie diese sind.

2. Anordnung nach Anspruch 1, dadurch gekennzeichnet, daß die Begrenzungselemente Rollen (6, 7) sind.

3. Anordnung nach Anspruch 1 oder 2, dadurch gekennzeichnet, daß die Begrenzungselemente (6, 7) an ihren Anlageflächen für den Teilungsträger (1) poliert sind.

4. Anordnung nach Anspruch 1 oder 2, dadurch gekennzeichnet, daß die Begrenzungselemente (6) an ihren Anlageflächen für den Teilungsträger (1) mit einem zusätzlichen Werkstoff beschichtet sind.

5. Anordnung nach einem der Ansprüche 1 bis 4, dadurch gekennzeichnet, daß die Begrenzungselemente (6, 7) an der Abtasteinrichtung (5) spiegelsymmetrisch zur idealen, gespannten Mittellage des Teilungsträgers (1) angebracht sind.

6. Anordnung nach Anspruch 4, dadurch gekennzeichnet, daß der zusätzliche Werkstoff Polytetrafluorethylen (PTFE) ist.

## Claims

1. Arrangement for positioning a fixed division carrier (1) of a length measuring system on a machine, in which to a first machine part (2) is fixed under pretension a strip-like, elastic division carrier (1) with a translatory division (9) and on a second machine part (3), movable relative to the first machine part (2), is provided a scanning device (5) for the division (9), a device for the forced relative association between the division carrier (1) and the scanning device (5) in the scanning direction (8) being provided on the second machine part (3) and which comprises at least two limiting members (6, 7), at least one limiting member (6, 7) being positioned on each side of the division carrier (1), characterized n that the elastic division carrier (1) is deflectable relative to the scanning device (5) in the scanning direction (8) between the limiting members (6, 7) located on its two sides and the at least two limiting members (6, 7) are used for limiting the deflection of the division carrier (1) in the scanning direction (5), the spacing (A) in the scanning direction (8) between the limiting members (6, 7) being chosen in such a way that they only allow in the scanning direction (8) deflections of the taut division carrier (1) which are smaller than or equal to the permitted positional tolerance (T) of the division (9).

2. Arrangement according to claim 1, characterized in that the limiting members are rolls (6, 7).

3. Arrangement according to claim 1 or 2, characterized in that the contact surfaces for the division carrier (1) of the limiting members (6, 7) are polished.

4. Arrangement according to claim 1 or 2, characterized in that on their contact surfaces for the division carrier (2) the limiting members (6) are coated with an additional material.

5. Arrangement according to one of the claims 1 to 4, characterized in that the limiting members (6, 7) are fitted to the scanning device in mirror symmetrical manner to the ideal, taut central position of the division carrier (1).

6. Arrangement according to claim 4, characterized in that the additional material is polytetrafluoroethylene (PTFE).

## Revendications

1. Agencement pour fixer la position du support flexible (1) de graduation d'un système de mesure de longueur sur une machine comprenant :
- fixé sur un premier élément (2) de la machine sous une tension initiale, un support élastique (1) en forme de ruban, comportant une graduation translatoire (9) et,
- fixé sur un deuxième élément (3) de la machine qui est mobile par rapport au premier élément (2) de cette machine, un dispositif de palpage (5) de la graduation,
- sur le deuxième élément (3) de la machine, un dispositif assurant un rapport d'association obligatoire entre le support de graduation (1) et le dispositif palpeur (5), dans la direction de palpage (8), ce dispositif étant constitué d'au moins deux éléments limiteurs (6, 7), un au moins de ces éléments limiteurs (6, 7) se trouvant de chaque côté du support de graduation (1),
cet agencement étant **CARACTERISE** en ce que :
- le dit support élastique (1) de graduation est, entre les éléments limiteurs (6, 7) disposés sur ses deux côtés en direction du palpage (8), orientable par rapport au dispositif de palpage (5) tandis que les deux éléments limiteurs (6, 7) servent à limiter l'orientation du support de graduation (1) à l'intérieur du dispositif de palpage (5) et ,
- la distance (A) mesurée dans la direction de palpage (8) entre les éléments limiteurs (6, 7) est sélectionnée de telle sorte que, dans cette direction de palpage (8), les orientations du support de graduation (1) tendu qui sont autorisées par les dits éléments limiteurs (6, 7) sont inférieures à la tolérance admissible (T) de la position de graduation (9) ou égales à celle-ci.

2. Agencement selon la revendication 1 **caractérisé** en ce que les éléments limiteurs sont des rouleaux (6, 7).

3. Agencement selon la revendication 1 ou 2 **caractérisé** en ce que les éléments limiteurs (6, 7) sont polis sur leurs faces d'application contre le support de graduation (1).

4. Agencement selon la revendication 1 ou 2 **caractérisé** en ce que, sur ses faces d'application contre le support de graduation (T), l'élément limiteur (6) est muni d'une couche d'un matériau additionnel.

5. Agencement selon l'une quelconque des revendications 1 à 4 **caractérisé** en ce que les éléments limiteurs (6, 7) sont fixés sur le dispositif de palpage (5) symétriquement par rapport à la position centrale idéale du support de graduation (1) tendu.

6. Agencement selon la revendication 4 **caractérisé** enc e que le matériau additionnel est du polytétrafluoroéthylène (PTFE).
